(19) Europäisches Patentamt / European Patent Office / Office européen des brevets

(11) **EP 4 057 052 B1**

(12) **EUROPEAN PATENT SPECIFICATION**

(45) Date of publication and mention
of the grant of the patent:
**06.05.2026   Bulletin 2026/19**

(21) Application number: **21305270.7**

(22) Date of filing: **08.03.2021**

(51) International Patent Classification (IPC):
***G02C 7/02*** *(2006.01)*      ***G02C 7/10*** *(2006.01)*

(52) Cooperative Patent Classification (CPC):
**G02C 7/022; B29D 11/00009; B29D 11/00317;
B29D 11/0073; G02C 7/104;** G02C 7/107;
G02C 7/108; G02C 2202/24

(54) **OPHTHALMIC SET FOR MYOPIA PROGRESSION CONTROL**

OPHTHALMISCHES SET ZUR KONTROLLE DER MYOPIEPROGRESSION

ENSEMBLE OPHTALMIQUE POUR LE CONTRÔLE DE LA PROGRESSION DE LA MYOPIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.09.2022   Bulletin 2022/37**

(73) Proprietor: **ESSILOR INTERNATIONAL
94220 Charenton-Le-Pont (FR)**

(72) Inventors:
  • **BARANTON, Konogan
    94220 CHARENTON-LE-PONT (FR)**
  • **VILLETTE, Thierry
    94220 CHARENTON-LE-PONT (FR)**
  • **BARRAU, Coralie
    94220 CHARENTON-LE-PONT (FR)**
  • **GUILLOT, Matthieu
    94220 CHARENTON-LE-PONT (FR)**

(74) Representative: **Plasseraud IP
104 Rue de Richelieu
CS92104
75080 Paris Cedex 02 (FR)**

(56) References cited:
**EP-B1- 2 972 566          WO-A1-2019/238648
WO-A1-2020/014613      CN-U- 206 002 793
US-A1- 2019 258 086      US-A1- 2020 073 147
US-A1- 2021 001 145**

**Description**

The invention relates to an ophthalmic set for myopia progression control.

In the present description, the phrases myopia progression control, myopia progression slowing-down and myopia progression reduction are used with equivalent meanings.

-- **BACKGROUND OF THE INVENTION** --

Myopia progression has been established through many observations and well documented for several years, although its cause(s) is (are) still subject to doubts and research. Myopia progression is the fact that for one person, his/her myopia increases with time at a rate which almost did not exist before. Kids are the most concerned with myopia progression, and it is thus a major issue for humanity to address this problem. Artificial light, in particular that produced by screens or LEDs, is suspected as being a cause for myopia progression, but the actual biological phenomena and mechanisms which lead to myopia progression remain at hypothesis level.

Several principles and methods have already been proposed for myopia progression control, including those now mentioned.

One of these methods consists in adding to spectacle lenses or contact lenses used for correcting myopia microlenses that focus part of light at a distance in front of the retina, in addition to the light that is focused on the retina for allowing sharp vision to the wearer who is equipped with these spectacle or contact lenses.

Another method consists in adding to the spectacle lenses or contact lenses used for correcting myopia aspherical microlenses that produce light volumes at a distance in front of the retina, again in addition to the light that is focused on the retina for producing the sharp image.

Still another method consists in adding to the spectacle lenses or contact lenses used for correcting myopia diffusing elements which reduce the vision contrast of the wearer.

Still other methods implement progressive addition lenses which provide power addition to compensate for the lag of accommodation, or bifocal prismatic lenses for producing both the power addition and a prism effect.

All these methods are based on lenses that are designed for modifying wavefronts of the light that enters the eyes of the wearer, or modifying wavefronts of part of this light.

Further methods are based on other principles, such as administering atropine to the subject, or wearing rigid contact lenses during nights for modifying the shape of the cornea.

But all these methods turn out not to be efficient enough in many cases for myopia progression control, so that new solutions are still required or even combinations of solutions.

Studies have been performed recently that suggest a role of the choroid in myopia progression. A thinning of the choroid is associated with a long-term length increase of the eyeball, which leads to myopia increase. In addition, it has been recently observed that light may enhance choroid thinning. This would be due to biological circadian cycles, either local in the eyes or central for the person or even both. The wavelength range from 440 nm (nanometer) to 520 nm, corresponding to blue-green colours, is the one implied in central circadian regulation (with melanopsin absorption peaking at 480 nm) and is suspected playing a role for myopia progression. Another spectral range, from 560 nm to 600 nm and corresponding to amber light, also seems to play a role with myopia progression, but in a lesser extent compared to blue-green light. Filters of the prior art are disclosed in WO 2019/238648 A1.

Starting from this situation, one object of the present invention consists in providing new means for allowing myopia progression control, which are more efficient than those known from prior art.

Another object of the invention is that such means are easy for the user, without causing vision discomfort.

-- **SUMMARY OF THE INVENTION** --

For meeting at least one of these objects or others, a first aspect of the present invention proposes an ophthalmic set for myopia progression control, which comprises spectral filtering means arranged for being effective on light that enters a user's eye, these spectral filtering means being such that the ophthalmic set has a vision transmission value higher than 70% when assessed with CIE Standard Illuminant D65, and an average transmission value assessed over the spectral range from 460 nm to 510 nm, that is less than 30%, whereby the spectral filtering means are efficient for slowing-down a myopia progression of the user.

The ophthalmic set of the invention being based on spectral filtering capability, it operates in a way different than the devices known from prior art for controlling myopia progression. Indeed, the invention ophthalmic set addresses directly the amount of light that plays a role in myopia progression instead of modifying focus features of this light.

In a known manner, the vision transmission value commonly referred to as Tv takes into account spectral sensitivity features of the human eye, in addition to spectral features of the Illuminant D65. This vision transmission value Tv is such as defined in the standard NF EN 1836 and corresponds to the wavelength range from 380 nm to 780 nm.

Preferably, the spectral filtering means may be further such that the ophthalmic set has another average transmission value assessed over the other spectral range from 560 nm to 600 nm, that is equal to or less than 70%, preferably less than 50%. Indeed, light with wavelength values between 560 nm and 600 nm also participates in myopia progression, although in a lesser extent than light in the wavelength ranges 460 nm - 510 nm and 440 nm - 520 nm. In addition, filtering out light simultaneously in both ranges 460 nm - 510 nm, or 440 nm - 520 nm, and 560 nm - 600 nm improves color balancing, and thus improves color rendering for the user.

In preferred embodiments of the invention, the ophthalmic set may further comprise wavefront modifying means adapted to modify wavefronts of the light that enters the user's eye also for slowing down, by an own efficiency of such wavefront modifying means, the myopia progression of the user. The wavefront modifying means are combined with the spectral filtering means within the invention ophthalmic set so that the spectral filtering means and the wavefront modifying means are effective simultaneously on the light that enters the user's eye. Thus, respective efficiencies of the wavefront modifying means and spectral filtering means for slowing-down myopia progression are combined for the user of the ophthalmic set. Increased efficiency is thus obtained compared to devices designed only for modifying the light wavefronts. For such preferred embodiments, the wavefront modifying means may comprise one of the following:

/i/ a spectacle lens or contact lens provided with microlenses designed for focusing part of the light that enters the user's eye at a distance in front of a user's retina;

/ii/ a spectacle lens or contact lens provided with non-spherical microlenses, in particular aspherical microlenses, designed for producing light volumes at a distance in front of a user's retina from part of the light that enters the user's eye;

/iii/ a spectacle lens or contact lens provided with light-diffusing elements; /iv/ a spectacle lens or contact lens of progression addition type or bifocal prismatic type; or

/v/ a spectacle lens or contact lens adapted for correcting myopia, and the ophthalmic set further comprising an atropine amount to be administered to the user so as to be effective when the user is equipped with the wavefront modifying means combined with the spectral filtering means.

In particular, when the wavefront modifying means comprise light- diffusing elements, the ophthalmic set may have one of the following arrangements:

- the spectral filtering means are located on a side of the light-diffusing elements that is opposite the user, when the ophthalmic set is used; or

- the spectral filtering means are superposed with the light-diffusing elements within a common layer.

Alternatively, when the wavefront modifying means comprise microlenses, these microlenses may be of refractive type, in particular unifocal or bifocal refractive-type microlenses, or diffractive type, in particular pi-Fresnel microlenses.

For some of the preferred embodiments, the wavefront modifying means may advantageously comprise a spectacle lens, and the spectral filtering means may comprise one among:

- at least one optical filter of interferential type, which is located on a face of a base element of the spectacle lens;

- a dye composition that is included in a base element of the spectacle lens;

- a dye composition that is included in a film adhered on a base element of the spectacle lens;

- a patch suitable for being affixed, preferably in a releasable manner, to the spectacle lens; or

- a clip-on element to be affixed, preferably in a releasable manner, to a spectacle frame which accommodates the spectacle lens.

For others of the preferred embodiments, the wavefront modifying means may comprise a contact lens, and the spectral filtering means may comprise one among:

- a spectacle lens to be worn by the user simultaneously to the contact lens, such spectacle lens possibly being plano or myopia-correcting; or

- a dye composition that is included in a base element of the contact lens.

Generally for the invention, the ophthalmic set may further comprise at least one among:

- alert means adapted for informing the user to equip himself with the spectral filtering means, or with the spectral filtering means combined with the wavefront modifying means, at a fixed period before bedtime; and

- light-measurement means adapted for measuring an intensity of ambient light, and alert means coupled to the light-measurement means and adapted for informing the user to equip himself with the spectral filtering means, or with the spectral filtering means combined with the wavefront modifying means, when the intensity of ambient light becomes less than a threshold.

In this way, the invention ophthalmic set is further efficient for controlling myopia progression, since it can match the circadian rhythm of the phenomena and mechanisms which lead to the myopia progression. Indeed, the inventors have observed that light with wavelength values between 460 nm and 510 nm, or between 440 nm and 520 nm, participates more in myopia progression at evening time. Preferably, when the alert means are adapted for informing the user to equip himself with the spectral filtering means, or with the spectral filtering means combined with the wavefront modifying means, at fixed period before bedtime, this fixed period may be comprised between 1 hour and 6 hours, preferably comprised between 2 hours and 4 hours.

Alternatively, when the ophthalmic set comprises the light-measurement means for measuring the intensity of ambient light, the alert means being then coupled to the light-measurement means for informing the user to equip himself with the spectral filtering means, or with the spectral filtering means combined with the wavefront modifying means, when the intensity of ambient light becomes less than the threshold, this threshold may be comprised between 300 Lux and 1000 Lux, preferably between 500 Lux and 1000 Lux. Indeed, such light intensity threshold corresponds to natural light dimming as occurring in the evenings.

In other possible invention embodiments, the spectral filtering means may be electrochromic means capable of switching between a blue-blocking state where the average transmission value of the ophthalmic set, assessed over the spectral range from 460 nm to 510 nm, or 440 nm to 520 nm, is equal to or less than 50%, and a clear state where this average transmission value is higher than 50%. Then the ophthalmic set may comprise again light-measurement means adapted for measuring the intensity of ambient light, and control means coupled to the light-measurement means. For such other embodiments, the control means are arranged for switching the electrochromic means into the blue-blocking state when the intensity of ambient light becomes less than a threshold. This threshold may be again comprised between 300 Lux and 1000 Lux, preferably between 500 Lux and 1000 Lux.

A second aspect of the disclosure but not part of the claimed subject-matter proposes a process for maintaining vision comfort to a person, in particular to a child, when this process comprises providing this person with the ophthalmic set of the first invention aspect, and the person using the ophthalmic set in daily life.

These and other features of the invention will be now described with reference to the appended figures, which relate to preferred but not-limiting embodiments of the invention.

## -- BRIEF DESCRIPTION OF THE DRAWINGS --

Figure 1 illustrates embodiments of the invention.
Figure 2 shows transmission spectra of filters that may be used in examples not forming part of the invention.
Figure 3a illustrates a first manufacturing process based on layer addition.
Figure 3b illustrates a second manufacturing process also based on layer addition.
Figure 4a illustrates a preliminary step of a third manufacturing process based on molding.
Figure 4b illustrates an injection step of the third manufacturing process.

For clarity sake, element sizes which appear in these figures do not correspond to actual dimensions or dimension ratios. Also, same reference numbers which are indicated in different ones of these figures denote identical elements of elements with identical function.

**-- DETAILED DESCRIPTION OF THE INVENTION --**

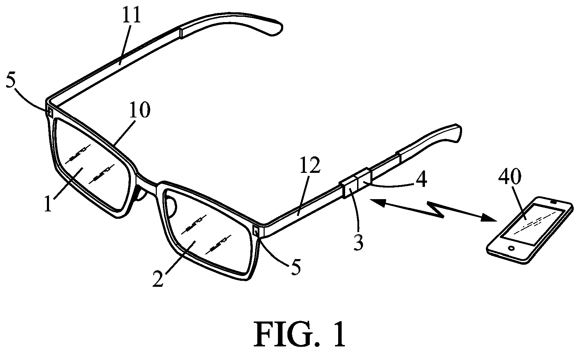

Although the embodiments of the invention now described with reference to Figure 1 uses spectacles, the Man skilled in the art will understand that contact lenses can be used as well. A spectacle equipment comprises a frame 10 designed for fitting the wearer's face, with temples 11 and 12 and spectacle lenses 1 and 2. Each lens 1, 2 may have a spherical power value suitable for correcting a myopia of the wearer, but the invention may also be used for a person devoid of myopia in order to avoid that such myopia appears and increases later for this person. For such latter case, the lenses 1 and 2 do not have spherical power, and are commonly referred to as plano lenses. According to the invention, this spectacle equipment is intended to slow down a myopia progression that may otherwise concern the wearer. To this end, the lenses 1 and 2 are designed for selectively reducing an intensity of the light part that relates to myopia progression. Thus, the lenses 1 and 2 act as spectral filters that selectively reduce intensity of the light having wavelength values between 440 nm and 520 nm, corresponding to blue-green colour. According to features of the invention, each of the lenses 1, 2 has an average transmission value assessed over the spectral range from 460 nm to 510 nm, called average blue-green transmission value, that is less than 30%, whereas its visual transmission value is above 70%. The average blue-green transmission value over the range 460 nm - 510 nm is assessed as a mean value of spectral transmission values that relate respectively to wavelength values comprised between 460 nm and 510 nm, with uniform weighting factors. Put another way, the average blue-green transmission value is calculated according to the following equation:

$$T(460 \text{ nm} - 510 \text{ nm}) = (1/50) \cdot \int_{460}^{510} T(\lambda) \cdot d\lambda$$

where the wavelength values $\lambda$ are expressed in nanometers, the summation interval is from 460 nm to 510 nm, and the spectral transmission values $T(\lambda)$ are expressed in %. Alternatively, the blue-green wavelength interval may be extended to 440 nm - 520 nm, so that the equation for the average blue-green transmission value can be also:

$$T(440 \text{ nm} - 520 \text{ nm}) = (1/80) \cdot \int_{440}^{520} T(\lambda) \cdot d\lambda$$

According to the invention, at least one of T(460 nm - 510 nm) and T(440 nm - 520 nm) is less than 30%.

The visual transmission, as commonly denoted Tv, is assessed using the Illuminant D65 as defined in the standards known in the art. It thus takes into account the sensitivity of the human eye. Tv is calculated according to the following equation:

$$Tv = \int_{380 \text{ nm}}^{780 \text{ nm}} T(\lambda) \cdot E(\lambda) \cdot V(\lambda) \cdot d\lambda \ / \ \int_{380 \text{ nm}}^{780 \text{ nm}} E(\lambda) \cdot V(\lambda) \cdot d\lambda$$

where $E(\lambda)$ describes the spectral intensity of CIE Standard Illuminant D65, and $V(\lambda) \cdot$ describes the spectral sensitivity of human eye. According to the invention, Tv is higher than 70%.

Optionally, another average transmission value may be assessed for the menses 1 and 2, over the further spectral range from 560 nm to 600 nm which corresponds to amber light. Such average amber transmission value is calculated according to:

$$T(560 \text{ nm} - 600 \text{ nm}) = (1/40) \cdot \int_{560}^{600} T(\lambda) \cdot d\lambda$$

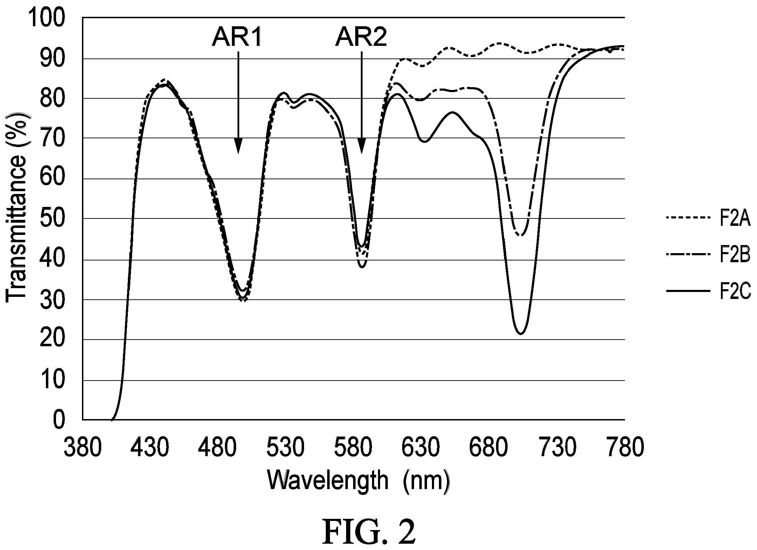

The spectral filtering features which are used in the invention may be obtained by incorporating one or more light-absorbing dyes in a material of base parts of the lenses 1 and 2. Alternatively, such dyes may be contained in films which are covering at least one face of each lens 1, 2. These dyes are selected for providing each lens with the above spectral filtering features. The Man skilled in the art knows how to select light-absorbing dyes from spectral features thereof as provided by chemical suppliers, and how to adjust dye concentrations within the material(s) of the lenses 1, 2 for obtaining desired transmission values. Appropriate dyes for obtaining the spectral features recited above are provided in WO 2019/238648. The diagram of Figure 2 shows three transmission spectra that are appropriate for the lenses 1 and 2 not falling under the scope of the invention. These spectra are labelled F2A, F2B and F2C, respectively. The horizontal axis of the diagram identifies the wavelength values in nanometers (nm), and the vertical axis identifies the spectral transmission values in %. Arrow AR1 points a first transmission minimum in the range 460 nm - 510 nm, and arrow AR2 points that in the other range 560 nm - 600 nm.

The lenses 1 and 2 with such spectral filtering features are efficient for avoiding choroid thinning, and therefore for slowing down myopia progression for the spectacle wearer. Since the blue-green range, corresponding to 460 nm - 510 nm

or 440 nm - 520 nm, is the most important range in the visible light for the choroid thickness variations, the capability of the lenses 1 and 2 to reduce selectively the light intensity in the blue-green range is essential for obtaining myopia progression slowing-down.

Because the other spectral range from 560 nm to 600 nm, corresponding to amber colour, has been also observed with effect on the choroid thickness variations, the dyes may be advantageously further selected for being also light-absorbing between 560 nm and 600 nm, preferably in a way to provide the lenses 1 and 2 with average amber transmission value of less than 70%, preferably less than 50%. In addition to strengthening the efficiency for myopia progression control as produced by the light reduction in the first range 460 nm - 510 nm, the additional light reduction in the second range 560 nm - 600 nm improves the colour balancing. Colour rendering is improved in this way for the wearer through the lenses 1 and 2, when compared to the light reduction only in 460 nm - 510 nm.

It is further possible to add at least one antireflecting coating on each lens 1, 2, in particular for reflecting blue light in the wavelength range 430 nm - 465 nm. Such reflection is efficient for protecting the user's eyes against light with short wavelengths as emitted by display screens and LED-based devices. Antireflecting coatings suitable for this purpose are described in EP 2 602 655 for example.

In preferred embodiments of the invention, the spectral filtering means recited above may be combined within each of the spectacle lenses 1, 2 with wavefront modifying means also suitable for slowing down myopia progression. In this way a combined efficiency is obtained for myopia progression slowing-down, which is higher than efficiency as resulting from addition of the separated respective effects of the spectral filtering means and wavefront modifying means.

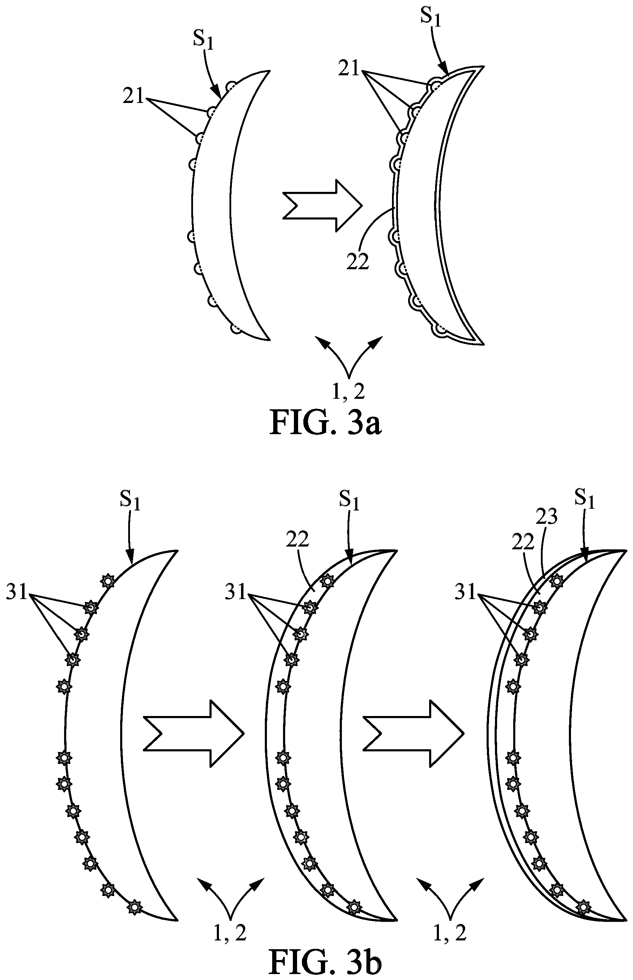

Figure 3a illustrates such preferred embodiment in which the wavefront modifying means are microlenses 21 which are incorporated in one of the lens surfaces, for example its front surface $S_1$. The microlenses 21, which may be of convergent type, cause part of the light which passes through the spectacle lens 1, 2 to focus at a distance in front of the wearer's retina, when the wearer is equipped with the spectacles. Alternatively, the microlenses 21 may be of non-spherical type, preferably of aspherical type, and suitable for producing light volumes at a distance in front of the wearer's retina. Advantageously, the microlenses 21 are distributed mainly in a peripheral area of each lens, so that a center area thereof is substantially devoid of microlenses and thus provides clear vision to the wearer for the main gaze direction. A base eyeglass which combines both myopia correction and myopia progression control is thus provided. This base eyeglass is then covered with a coating 22 which contains the dyes, thus forming the completed lens. For example, the coating 22 may be deposited using a dip-coating process, with a dipping solution that contains a blend of coating matrix precursors and dyes. Preferably, such coating 22 may be further designed for providing hard coating properties. Alternatively, the base eyeglass may be dipped into a tinting solution which contains the dyes, so that these dyes diffuse into the material of the base eyeglass. Still further tinting processes may also be used, such as dye sublimation. Possibly, the lenses thus provided with both wavefront modifying capability and spectral filtering capability may be further completed with antireflecting coatings and/or hard coatings.

Actually, the microlenses 21 tend to reduce the visual acuity of the wearer, because they disrupt the point spread function, commonly referred to as SPF, of the myopia compensating function of the lenses 1 and 2. But due to the chromatism of the material of the base eyeglass, and also that of the eyes, the blue portion of the visible range mainly participates in the peripheral area of the spot that constitutes the image of a point-source of white light on the wearer's retina. Therefore, reducing the intensity of the blue-green light as provided by the spectral filtering means involved in the invention reduces the diameter of the image spot. Improvement of the wearer's visual acuity is thus obtained, when compared to the lens provided with the microlenses but without the spectral filtering means. It is also possible modifying the microlenses in order to increase their efficiency for myopia progression control, while maintaining constant the wearer's visual acuity thanks to the effect of the spectral control means on the full spectrum point spread function. For example, a surface-concentration of the microlenses may be further increased in the peripheral area of each spectacle lens in this way.

Further embodiments of the invention may be obtained by replacing the microlenses 21 of refractive type as just described, either unifocal, bifocal or aspherical, with other types of microlenses, including of diffractive type, such as pi-Fresnel microlenses.

Figure 3b illustrates another preferred invention embodiment in which the wavefront modifying means are light-diffusing elements 31, as described in US 10,302,962. Such light-diffusing elements 31 may be patterns of suitable size which are engraved at the front surface $S_1$ of each base eyeglass, or small particles of suitable size which are deposited on this front surface $S_1$. These light-diffusing patterns or particles may be varied in surface-concentration between the peripheral and central areas of the base eyeglass front surface in order to maintain sharp vision for the main gaze direction. As before, a coating 22 which contains the dyes may be deposited on the base eyeglass, with suitable index difference with respect to the material of the base eyeglass or the light-diffusing particles to ensure light-diffusion efficiency. Antireflecting coating and/or hard coating 23 may be further applied on the coating 22.

Actually, the light-diffusing elements 31 cause back-scattering of part of the light that originates from the surroundings of the wearer, so that cosmetic issues may arise for an observer who looks at the spectacles. Indeed, each of the wearer's eyes may appear blurred to the observer through the spectacle lenses 1,2 due to the back-scattered light. Therefore, reducing the intensity of the blue-green light that is back-scattered by the light-diffusing elements 31 improves the cosmetic aspect of the lenses. It is thus advantageous to apply the coating 22 that contains the absorbing dyes above the light-diffusing elements 31 on the front surface $S_1$, so that the coating 22 absorbs part of the back-scattered light.

Other embodiments of the invention may be obtained by arranging the light-diffusing elements on the rear surface of the base eyeglass, i.e. on the wearer's side of the eyeglass. For example, a layer may be deposited on this rear surface of the base eyeglass, which is light-diffusing in the range 440 nm - 520 nm. Then, the dyes that absorb in the same wavelength range may be either incorporated within the same layer, or within an additional layer intermediate between the light-diffusing layer and the base eyeglass on the rear surface of this latter, or within the base eyeglass itself, or within an additional layer which is arranged on the front surface of the base eyeglass.

Further embodiments of the invention may be obtained by combining the spectral filtering means for blue-green light reduction with other wavefront modifying means such as eyeglasses of progression addition type or bifocal prismatic type.

It is also possible to combine spectacles provided with the spectral filtering means for blue-green light reduction with administration of atropine to the wearer and myopia compensation, for obtaining improved myopia progression control.

Still further embodiments of the invention may have one of the following configurations, in addition to the spectacle eyeglasses being provided with the wavefront modifying means:

- the dyes responsible for the blue-green light reduction may be incorporated in a patch which is releasably adhered to the front or rear surface of each eyeglass; or

- the dyes responsible for the blue-green light reduction may be incorporated in glasses of a clip-on element that can be releasably affixed to the spectacles.

In other possible embodiments of the invention, the wavefront modifying means may be provided by contact lenses to be worn by the user, and the dyes responsible for the blue-green light reduction may be incorporated in either the contact lenses, or in eyeglasses of spectacles to be worn in addition to the contact lenses.

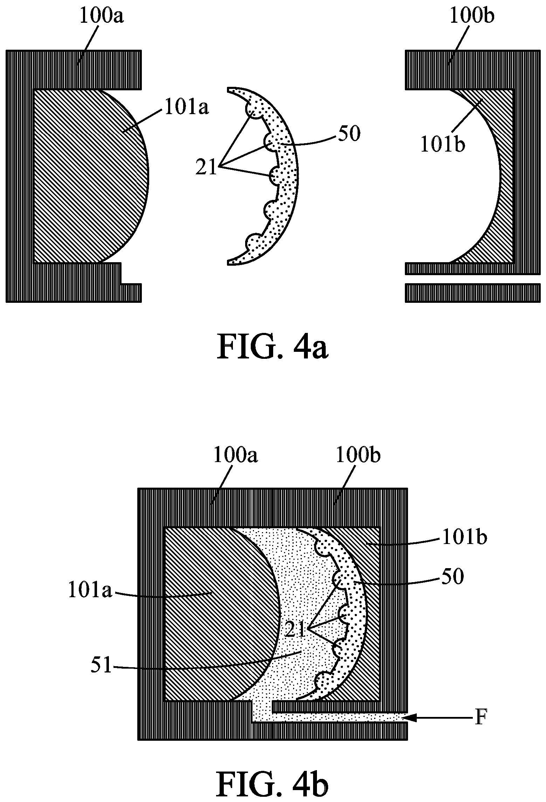

Figures 4a and 4b illustrate another manufacturing process which can be used for producing lenses that can be used in the spectacles of Figure 1 for implementing the invention. It is based on using a wafer 50 for each lens 1, 2, which constitutes the wavefront modifying means. This wafer 50 may be based on polycarbonate, for example, and incorporates microlenses 21 in a surface thereof which is intended to be internal to the lens. For example, if the wafer 50 is dedicated to form the front surface of the lens 1, 2, the microlenses 21 may be arranged on the concave surface of the wafer. The manufacturing process consists in arranging the wafer 50 within an injection mold used for shaping a base part of the lens, and then injecting the material of the lens base part so that it adheres to the wafer. Figure 4a shows two mold parts 100a and 100b which are designed for cooperating with each other for forming the complete mold. The mold part 100a contains a first insert 101a shaped for producing the rear surface of the lens with appropriate rear surface design. Similarly, the other mold part 100b contains a second insert 101b shaped for producing the front surface of the lens with another appropriate surface design. Both mold parts 100a and 100b are assembled to each other while the insert 50 in maintained against the insert 101b, as shown in Figure 4b. Then the mold is filled with the polymer-based material according to the arrow F, so as to form the base part 51 of the lens. After cooling down and opening of the mold, the lens is extracted. It is comprised on the lens base part 51 and wafer 50 which are adhered to each other, with external surfaces of the lens which conform those of the inserts 101a and 101b. For implementing the invention, the polymer-based material of the lens base part 51 may contain dyes that are absorbing in the blue-green range. But preferably, filtering efficiency in the blue-green range may be provided by a dye content of the wafer material, or by a dye-containing layer or interferential filter which is applied as a next step on the front surface of the lens, i.e. the convex surface of the insert 50. One advantage of this manufacturing process is the absence of relief pattern in the outer lens surfaces that could be due to the microlenses 21.

In addition, it has been observed that light with wavelength values in the range 440 nm - 520 nm that enters the eyes in the morning causes choroid thickening, whereas light with same wavelength values but received in the evenings causes choroid thinning. This would be due to biological circadian cycles, both local in each eye and central for the person. The wavelength range 440 nm - 520 nm corresponding to blue-green colour appears as the most important part of the visible light for myopia progression related to circadian cycles. The other spectral range 560 nm - 600 nm corresponding to amber light also seems to play a role with myopia progression related to circadian cycles, but in a lesser extent compared to blue-green light. The invention improvements which are now described are designed for matching such circadian cycles, for further increasing the efficiency in controlling myopia progression.

The spectacles of Figure 1, including the invention spectral filtering means and possibly also the wavefront modifying means, may be combined with alert means adapted for informing the user to equip himself with the spectacles at appropriate time. In first possible embodiments of such alert means, they may be comprised of an application hosted in a personal assistant device of the user such as a smartphone 40 (see Figure 1). For example, such application may be designed for determining an expected bedtime of the wearer, for example based on times of last use sessions of the smartphone in preceding days, and/or light switch-off times as detected by the smartphone light sensor in the preceding days. Then, the application may be configured to alert the user for equipping with the filtering spectacles for example 3 hours before the expected bedtime.

In other possible embodiments of the control means, they may incorporate at least one ambient light sensor which may be accommodated in the spectacle frame 10, as indicated by reference 5. This light sensor performs measurements of the ambient light level as existing in the surroundings of the wearer and supplies the measurement results to a wireless communication unit also accommodated in the spectacle frame 10. Then the measurement results are retransmitted to the smartphone 40. For such operation, the smartphone 40 may be wireless connected to the communication unit of the spectacle frame 10. Then, the alert for the user to equip with the spectacles may be issued by the smartphone 40 once the ambient light intensity becomes lower than a threshold, thereby indicating evening time. Such threshold may be set to 750 Lux, for example.

Other possible embodiments may be based on electrochromic technology, to allow the user to wear the spectacles permanently. The spectacle lenses may be provided with dioptric power and/or astigmatism for compensating a user's ametropia. Electrochromic technology makes it possible to activate temporarily spectral filtering means, for example selectively during 3 hours before bedtime. To this end, the spectacle lenses 1 and 2 are provided with respective electrochromic devices across their whole optical areas. Electrochromic compounds are selected to provide a clear state with average blue-green transmission value that is higher than 50%, and a blue-blocking state with the average blue-green transmission value that is less than 50%. The spectacle frame 10 accommodates batteries 4 suitable for causing switching of the electrochromic devices from clear state to blue-blocking state, and also the reverse operation. Control means 3, also accommodated in the spectacle frame 10, are configured to trigger switching of the electrochromic devices from clear state to blue-blocking state in the evening, when natural dimming of the ambient light reaches the threshold. Such embodiments based on electrochromic technology may be combined with the ambient light sensor(s) 5 and/or smartphone application as before. One advantage of combining the electrochromic technology with an ambient light sensor is that the spectacles can be autonomous for producing myopia progression control, without requiring a smartphone. The batteries 4 and the control means 3 may be accommodated in the temples 11 and 12 of the frame 10, for example.

According to an improvement of the electrochromic-based embodiments, the transition from clear state to blue-blocking state may be soft, with a progressive evolution of the light transmission between both states. This avoids discomfort caused by sudden switch. Indeed, soft transition may not be detected by the spectacle wearer, since it may be partially compensated for by his pupil variations.

Invention embodiments different from those described above may be obtained, in particular regarding the actual implementation of the spectral filtering means and/or wavefront modifying means. For example, the spectral filtering means may be comprised of at least one interferential filter, possibly with a multilayered filter structure, instead of using light-absorbing dyes. Using combinations of dyes and interferential filter is also possible. Generally, one will understand that combinations of such spectral filtering means with wavefront modifying means of any type may also be used.

## Claims

1. An ophthalmic set for myopia progression control, comprising spectral filtering means arranged for being effective on light that enters a user's eye, said spectral filtering means being such that the ophthalmic set has a vision transmission value higher than 70% when assessed with CIE Standard Illuminant D65, and an average transmission value assessed over the spectral range from 460 nm to 510 nm that is less than 30%.

2. The ophthalmic set of claim 1, wherein the spectral filtering means are further such that the ophthalmic set has another average transmission value assessed over the other spectral range from 560 nm to 600 nm, that is equal to or less or equal than 70%, preferably less than 50%.

3. The ophthalmic set of claim 1 or 2, further comprising wavefront modifying means adapted to modify wavefronts of the light that enters the user's eye for slowing down, by an own efficiency of said wavefront modifying means, the myopia progression of the user,
the wavefront modifying means being combined with the spectral filtering means within the ophthalmic set so that the spectral filtering means and the wavefront modifying means are effective simultaneously on the light that enters the user's eye, whereby respective efficiencies of the wavefront modifying means and spectral filtering means for slowing-down myopia progression are combined for the user of the ophthalmic set.

4. The ophthalmic set of claim 3, wherein the wavefront modifying means comprise one of the following:

/i/ a spectacle lens (1, 2) or contact lens provided with microlenses (21) designed for focusing part of the light that enters the user's eye at a distance in front of a user's retina;

/ii/ a spectacle lens (1, 2) or contact lens provided with non-spherical microlenses designed for producing light volumes at a distance in front of a user's retina from part of the light that enters the user's eye;

/iii/ a spectacle lens (1, 2) or contact lens provided with light-diffusing elements (31);

/iv/ a spectacle lens (1, 2) or contact lens of progression addition type or bifocal prismatic type; or

/v/ a spectacle lens or contact lens adapted for correcting myopia, and the ophthalmic set further comprising an atropine amount to be administered to the user so as to be effective when the user is equipped with the wavefront modifying means combined with the spectral filtering means.

5. The ophthalmic set of claim 3 or 4, wherein the wavefront modifying means comprise light-diffusing elements (31), and the ophthalmic set has one of the following arrangements:

- the spectral filtering means are located on a side of the light-diffusing elements (31) that is opposite the user, when said ophthalmic set is used; or
- the spectral filtering means are superposed with the light-diffusing elements (31) within a common layer.

6. The ophthalmic set of claim 3 or 4, wherein the wavefront modifying means comprise microlenses (21), said microlenses being of refractive type, in particular unifocal or bifocal refractive-type microlenses, or diffractive type, in particular pi-Fresnel microlenses.

7. The ophthalmic set of any one of claims 3 to 6, wherein the wavefront modifying means comprise a spectacle lens, and the spectral filtering means comprise one among:

- at least one optical filter of interferential type, located on a face of a base element of the spectacle lens;
- a dye composition that is included in a base element of the spectacle lens;
- a dye composition that is included in a film adhered on a base element of the spectacle lens;
- a patch suitable for being affixed, preferably in a releasable manner, to the spectacle lens; or
- a clip-on element to be affixed, preferably in a releasable manner, to a spectacle frame which accommodates the spectacle lens.

8. The ophthalmic set of any one of claims 3 to 6, wherein the wavefront modifying means comprise a contact lens, and the spectral filtering means comprise one among:

- a spectacle lens to be worn by the user simultaneously to the contact lens; or
- a dye composition that is included in a base element of the contact lens.

9. The ophthalmic set of any one of claims 1 to 8, further comprising at least one among:

- alert means adapted for informing the user to equip himself with the spectral filtering means, or with the spectral filtering means combined with the wavefront modifying means, at a fixed period before bedtime; and
- light-measurement means (5) adapted for measuring an intensity of ambient light, and alert means coupled to the light-measurement means and adapted for informing the user to equip himself with the spectral filtering means, or with the spectral filtering means combined with the wavefront modifying means, when the intensity of ambient light becomes less than a threshold.

10. The ophthalmic set of claim 9, comprising the alert means adapted for informing the user to equip himself with the spectral filtering means, or with the spectral filtering means combined with the wavefront modifying means, at the fixed period before a determined expected bedtime, said fixed period being comprised between 1 hour and 6 hours, preferably comprised between 2 hours and 4 hours.

11. The ophthalmic set of claim 9, comprising the light-measurement means (5) adapted for measuring the intensity of ambient light, and the alert means coupled to the light-measurement means and adapted for informing the user to equip himself with the spectral filtering means, or with the spectral filtering means combined with the wavefront modifying means, when the intensity of ambient light becomes less than the threshold, said threshold being comprised between 300 Lux and 1000 Lux.

12. The ophthalmic set of any one of claims 1 to 8, wherein the spectral filtering means are electrochromic means capable of switching between a blue-blocking state where the average transmission value of the ophthalmic set, assessed over the spectral range from 460 nm to 510 nm, or 440 nm to 520 nm, is equal to or less than 50%, and a clear state where said average transmission value is higher than 50%,

and the ophthalmic set further comprises light-measurement means (5) adapted for measuring an intensity of ambient light, and control means coupled to the light-measurement means and arranged for switching the electrochromic means into the blue-blocking state when the intensity of ambient light becomes less than a threshold.

**Patentansprüche**

1. Ophthalmisches Set zur Kontrolle einer Myopieprogression, das ein spektrales Filterelement umfasst, das ausgelegt ist, um effektiv für Licht zu sein, das in das Auge eines Nutzers eintritt, wobei das spektrale Filterelement derart gestaltet ist, dass das ophthalmische Set einen Sichttransmissionswert von mehr als 70% aufweist, wenn es mit der CIE Normlichtart D65 bewertet wird, und einen mittleren Transmissionswert aufweist, der, wenn er über den Spektralbereich von 460 nm bis 510 nm bewertet wird, kleiner als 30% ist.

2. Ophthalmisches Set nach Anspruch 1, wobei das spektrale Filterelement ferner derart gestaltet ist, dass das ophthalmische Set einen anderen mittleren Transmissionswert aufweist, der, wenn er über den anderen spektralen Bereich von 560 nm bis 600 nm bewertet wird, gleich oder kleiner als 70%, vorzugsweise kleiner als 50% ist.

3. Ophthalmisches Set nach Anspruch 1 oder 2, das ferner ein Element für eine Wellenfrontmodifizierung umfasst, das geeignet ist, Wellenfronten des Lichts zu modifizieren, das in das Auge des Benutzers eindringt, um durch eine eigene Wirksamkeit des Elements für eine Wellenfrontmodifizierung die Myopieprogression des Benutzers zu verlangsamen,

   wobei das Element für eine Wellenfrontmodifizierung mit dem spektralen Filterelement innerhalb des ophthalmischen Sets kombiniert wird, sodass das spektrale Filterelement und das Element für eine Wellenfrontmodifizierung gleichzeitig auf das Licht einwirken, das in das Auge des Benutzers eindringt, wobei die jeweiligen Wirkungsgrade des Elements für eine Wellenfrontmodifizierung und des spektralen Filterelements zum Verlangsamen der Myopieprogression für den Benutzer des ophthalmischen Sets kombiniert werden.

4. Ophthalmisches Set nach Anspruch 3, wobei das Element für eine Wellenfrontmodifizierung eines der folgenden Elemente umfasse:

   /i/ ein Brillenglas (1, 2) oder eine Kontaktlinse mit Mikrolinsen (21), die ausgelegt sind, um einen Teil des Lichts, das in das Auge des Benutzers eindringt, in einem Abstand vor der Netzhaut des Benutzers zu fokussieren;
   /II/ ein Brillenglas (1, 2) oder eine Kontaktlinse, die mit nicht-sphärischen Mikrolinsen bereitgestellt werden, die ausgelegt sind, um die Lichtvolumen in einem Abstand vor der Netzhaut des Nutzers aus einem Teil des Lichts zu erzeugen, das in das Auge des Nutzers eindringt;
   /III/ ein Brillenglas (1, 2) oder eine Kontaktlinse, die mit lichtstreuenden Elementen (31) bereitgestellt werden;
   /IV/ ein Brillenglas (1, 2) oder eine Kontaktlinse eines Gleitsichttyps oder eines bifokalen Prismentyps; oder
   /V/ ein Brillenglas oder eine Kontaktlinse, die geeignet sind zum Korrigieren einer Myopie, und wobei das ophthalmische Set ferner eine Atropindosis umfasst, die dem Benutzer verabreicht wird, um wirksam zu sein, wenn der Benutzer mit dem Element für eine Wellenfrontmodifizierung in Kombination mit dem spektralen Filterelement ausgestattet ist.

5. Ophthalmisches Set nach Anspruch 3 oder 4, wobei das Element für eine Wellenfrontmodifizierung lichtstreuende Elemente (31) aufweist und das ophthalmische Set eine der folgenden Anordnungen aufweist:

   - das spektrale Filterelement befindet sich auf einer Seite der lichtstreuenden Elemente (31), die sich gegenüber dem Benutzer befinden, wenn das ophthalmische Set verwendet wird; oder
   - das spektrale Filterelement wird von den lichtstreuenden Elementen (31) innerhalb einer gemeinsamen Schicht überlagert.

6. Ophthalmisches Set nach Anspruch 3 oder 4, wobei das Element für eine Wellenfrontmodifizierung Mikrolinsen (21) umfasst, wobei die Mikrolinsen vom refraktiven Typ, insbesondere unifokale oder bifokale refraktive Mikrolinsen, oder vom diffraktiven Typ, insbesondere pi-Fresnel-Mikrolinsen sind.

7. Ophthalmisches Set nach einem der Ansprüche 3 bis 6, wobei das Element für eine Wellenfrontmodifizierung ein Brillenglas umfasst und das spektrale Filterelement eines umfasst von:

- mindestens einem optischen Filter eines interferenziellen Typs, der sich auf einer Vorderseite eines Basiselements des Brillenglases befindet;
- einer Farbstoffzusammensetzung, die in einem Basiselement des Brillenglases enthalten ist;
- einer Farbstoffzusammensetzung, die in einem Film enthalten ist, der an einem Basiselement des Brillenglases befestigt wird;
- einem Patch, das geeignet ist, um vorzugsweise in einer ablösbaren Weise an dem Brillenglas befestigt zu werden; oder
- einem Aufsteckelement, das vorzugsweise in einer ablösbare Weise an einem Brillengestell befestigt wird, in dem das Brillenglas untergebracht wird.

8. Ophthalmisches Set nach einem der Ansprüche 3 bis 6, wobei das Element für eine Wellenfrontmodifizierung eine Kontaktlinse umfasst und wobei das spektrale Filterelement eines umfasst von:

- einem Brillenglas, das von dem Benutzer gleichzeitig mit der Kontaktlinse getragen wird, oder
- einer Farbstoffzusammensetzung, die in einem Basiselement der Kontaktlinse enthalten ist.

9. Ophthalmisches Set nach einem der Ansprüche 1 bis 8, das ferner mindestens eines umfasst von:

- einem Warnelement, das geeignet ist, den Benutzer zu informieren, sich innerhalb eines bestimmten Zeitraums vor dem Schlafengehen mit dem spektralen Filterelement oder mit dem spektralen Filterelement in Kombination mit dem Element für eine Wellenfrontmodifizierung auszustatten, und
- einem Lichtmesselement (5), das geeignet ist zum Messen einer Intensität eines Umgebungslichts, und einem Warnelement, das mit dem Lichtmesselement gekoppelt sind und geeignet ist, um den Benutzer zu informieren, sich mit dem spektralen Filterelement oder mit dem spektralen Filterelement in Kombination mit dem Element für eine Wellenfrontmodifizierung auszustatten, wenn die Intensität des Umgebungslichts unter einen Schwellenwert sinkt.

10. Ophthalmisches Set nach Anspruch 9, das ein Warnelement umfasst, das geeignet ist, um den Benutzer zu informieren, sich mit dem spektralen Filterelement oder mit dem spektralen Filterelement in Kombination mit dem Element für eine Wellenfrontmodifizierung in dem bestimmten Zeitraum vor einer bestimmten erwarteten Schlafenszeit auszustatten, wobei der bestimmte Zeitraum zwischen 1 Stunde und 6 Stunden, vorzugsweise zwischen 2 Stunden und 4 Stunden liegt.

11. Ophthalmisches Set nach Anspruch 9, welches das Lichtmesselement (5), das geeignet ist zum Messen der Intensität des Umgebungslichts, und das Warnelement umfasst, das mit dem Lichtmesselement gekoppelt ist und das geeignet ist, um den Benutzer darüber zu informieren, sich mit dem spektralen Filterelement oder mit dem spektralen Filterelement kombiniert mit dem Element für eine Wellenfrontmodifizierung auszustatten, wenn die Intensität des Umgebungslichts kleiner als der Schwellenwert wird, wobei der Schwellenwert zwischen 300 Lux und 1000 Lux liegt.

12. Ophthalmisches Set nach einem der Ansprüche 1 bis 8, wobei das spektrale Filterelement ein elektrochromes Element ist, das in der Lage ist, zwischen einem blau-blockierenden Zustand, bei dem der durchschnittliche Transmissionswert des ophthalmischen Sets über den Spektralbereich von 460 nm bis 510 nm oder 440 nm bis 520 nm bewertet wird, gleich oder geringer als 50% ist, und einem klaren Zustand umzuschalten, bei dem der durchschnittliche Transmissionswert größer als 50% ist, und wobei das ophthalmische Set ferner ein Lichtmesselement (5), das geeignet ist zum Messen einer Intensität eines Umgebungslichts, und ein Warnelement umfasst, das mit dem Lichtmesselement gekoppelt ist und das ausgelegt ist zum Umschalten des elektrochromen Elements in den blau-blockierenden Zustand, wenn die Intensität des Umgebungslichts geringer als ein Schwellenwert wird.

**Revendications**

1. Ensemble ophtalmique pour le contrôle de la progression de la myopie, comprenant des moyens de filtrage spectral agencés pour être efficaces sur la lumière qui pénètre dans l'œil d'un utilisateur, lesdits moyens de filtrage spectral étant tels que l'ensemble ophtalmique a une valeur de transmission de vision supérieure à 70 % lorsqu'elle est évaluée avec l'illuminant normalisé CIE D65, et une valeur de transmission moyenne évaluée sur la plage spectrale de 460 nm à 510 nm qui est inférieure à 30 %.

2.  Ensemble ophtalmique selon la revendication 1, les moyens de filtrage spectral étant en outre tels que l'ensemble ophtalmique a une autre valeur de transmission moyenne évaluée sur l'autre plage spectrale de 560 nm à 600 nm, qui est inférieure ou égale à 70 %, de préférence inférieure à 50 %.

3.  Ensemble ophtalmique selon la revendication 1 ou 2, comprenant en outre des moyens de modification de front d'onde adaptés pour modifier les fronts d'onde de la lumière qui pénètre dans l'œil de l'utilisateur pour ralentir, par une efficacité propre desdits moyens de modification de front d'onde, la progression de la myopie de l'utilisateur,
    les moyens de modification de front d'onde étant combinés avec les moyens de filtrage spectral à l'intérieur de l'ensemble ophtalmique de sorte que les moyens de filtrage spectral et les moyens de modification de front d'onde agissent simultanément sur la lumière qui pénètre dans l'œil de l'utilisateur, les efficacités respectives des moyens de modification de front d'onde et des moyens de filtrage spectral pour ralentir la progression de la myopie étant ainsi combinées pour l'utilisateur de l'ensemble ophtalmique.

4.  Ensemble ophtalmique selon la revendication 3, les moyens de modification de front d'onde comprenant l'un des éléments suivants :

    /i/ un verre de lunettes (1, 2) ou une lentille de contact pourvu(e) de microlentilles (21) conçues pour focaliser une partie de la lumière qui pénètre dans l'œil de l'utilisateur à une distance devant la rétine de l'utilisateur ;
    /ii/ un verre de lunettes (1, 2) ou une lentille de contact pourvu(e) de microlentilles non sphériques conçues pour produire des volumes de lumière à une distance devant la rétine de l'utilisateur à partir d'une partie de la lumière qui pénètre dans l'œil de l'utilisateur ;
    /iii/ un verre de lunettes (1, 2) ou une lentille de contact pourvu(e) d'éléments diffusant la lumière (31) ;
    /iv/ un verre de lunettes (1, 2) ou une lentille de contact de type à addition progressive ou de type prismatique bifocal ; ou
    /v/ un verre de lunettes ou une lentille de contact adaptés pour corriger la myopie, et l'ensemble ophtalmique comprenant en outre une quantité d'atropine à administrer à l'utilisateur de manière à être efficace lorsque l'utilisateur est équipé des moyens de modification de front d'onde combinés aux moyens de filtrage spectral.

5.  Ensemble ophtalmique selon la revendication 3 ou 4, les moyens de modification de front d'onde comprenant des éléments diffusant la lumière (31), et l'ensemble ophtalmique ayant l'un des agencements suivants :

    - les moyens de filtrage spectral sont situés sur un côté des éléments diffusant la lumière (31) qui est opposé à l'utilisateur, lorsque ledit ensemble ophtalmique est utilisé ; ou
    - les moyens de filtrage spectral sont superposés aux éléments diffusant la lumière (31) à l'intérieur d'une couche commune.

6.  Ensemble ophtalmique selon la revendication 3 ou 4, les moyens de modification de front d'onde comprenant des microlentilles (21), lesdites microlentilles étant de type réfractif, en particulier des microlentilles de type réfractif unifocal ou bifocal, ou de type diffractif, en particulier des microlentilles pi-Fresnel.

7.  Ensemble ophtalmique selon l'une quelconque des revendications 3 à 6, les moyens de modification de front d'onde comprenant un verre de lunettes, et les moyens de filtrage spectral comprenant l'un parmi :

    - au moins un filtre optique de type interférentiel, situé sur une face d'un élément de base du verre de lunettes ;
    - une composition tinctoriale qui est incluse dans un élément de base du verre de lunettes ;
    - une composition tinctoriale qui est incluse dans un film collé sur un élément de base du verre de lunettes ;
    - un patch apte à être fixé, de préférence de manière amovible, au verre de lunettes ; ou
    - un élément clipsable à fixer, de préférence de manière amovible, à une monture de lunettes qui reçoit le verre de lunettes.

8.  Ensemble ophtalmique selon l'une quelconque des revendications 3 à 6, les moyens de modification de front d'onde comprenant une lentille de contact, et les moyens de filtrage spectral comprenant l'un parmi :

    - un verre de lunettes à porter par l'utilisateur simultanément à la lentille de contact ; ou
    - une composition tinctoriale qui est incluse dans un élément de base de la lentille de contact.

9. Ensemble ophtalmique selon l'une quelconque des revendications 1 à 8, comprenant en outre au moins un élément parmi :

- des moyens d'alerte adaptés pour informer l'utilisateur de s'équiper des moyens de filtrage spectral, ou des moyens de filtrage spectral combinés aux moyens de modification de front d'onde, à une période fixe avant le coucher ; et
- des moyens de mesure de lumière (5) adaptés pour mesurer une intensité de lumière ambiante, et des moyens d'alerte couplés aux moyens de mesure de lumière et adaptés pour informer l'utilisateur de s'équiper des moyens de filtrage spectral, ou des moyens de filtrage spectral combinés aux moyens de modification de front d'onde, lorsque l'intensité de lumière ambiante devient inférieure à un seuil.

10. Ensemble ophtalmique selon la revendication 9, comprenant les moyens d'alerte adaptés pour informer l'utilisateur de s'équiper des moyens de filtrage spectral, ou des moyens de filtrage spectral combinés aux moyens de modification de front d'onde, à la période fixe avant une heure de coucher attendue déterminée, ladite période fixe étant comprise entre 1 heure et 6 heures, de préférence comprise entre 2 heures et 4 heures.

11. Ensemble ophtalmique selon la revendication 9, comprenant les moyens de mesure de lumière (5) adaptés pour mesurer l'intensité de lumière ambiante, et les moyens d'alerte couplés aux moyens de mesure de lumière et adaptés pour informer l'utilisateur de s'équiper des moyens de filtrage spectral, ou des moyens de filtrage spectral combinés aux moyens de modification de front d'onde, lorsque l'intensité de lumière ambiante devient inférieure au seuil, ledit seuil étant compris entre 300 lux et 1000 lux.

12. Ensemble ophtalmique selon l'une quelconque des revendications 1 à 8, les moyens de filtrage spectral étant des moyens électrochromiques capables de commuter entre un état de blocage du bleu où la valeur de transmission moyenne de l'ensemble ophtalmique, évaluée sur la plage spectrale de 460 nm à 510 nm, ou de 440 nm à 520 nm, est égale ou inférieure à 50 %, et un état clair où ladite valeur de transmission moyenne est supérieure à 50 %, et l'ensemble ophtalmique comprenant en outre des moyens de mesure de lumière (5) adaptés pour mesurer une intensité de lumière ambiante, et des moyens de commande couplés aux moyens de mesure de lumière et agencés pour commuter les moyens électrochromiques dans l'état de blocage du bleu lorsque l'intensité de lumière ambiante devient inférieure à un seuil.

FIG. 1

FIG. 2

FIG. 3a

FIG. 3b

FIG. 4a

FIG. 4b

**EP 4 057 052 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019238648 A1
- WO 2019238648 A
- EP 2602655 A
- US 10302962 B